# EUROPEAN PATENT SPECIFICATION

(11) **EP 1 653 487 B1**
(45) Date of publication and mention of the grant of the patent: **12.03.2008**
(21) Application number: 04425783.0
(22) Date of filing: 19.10.2004
(51) Int. Cl.: H01F 27/02, H01F 27/32

(54) **Insulating arrangement for electrical components**
Isolieranordnung für elektrische Bauelementen
Dispositif d'isolation pour des composants électriques

(43) Date of publication of application: 03.05.2006
(73) Proprietor: Patent-Treuhand-Gesellschaft für elektrische Glühlampen mbH, 81543 München (DE); OSRAM S.P.A. - SOCIETA' RIUNITE OSRAM EDISON CLERICI, 20144 Milano (IT)
(72) Inventor: Franck, Felix, Dr., 80333 München (DE)
(74) Representative: Bosotti, Luciano

(56) References cited:
- EP-A- 1 313 113
- US-A- 5 783 982
- PATENT ABSTRACTS OF JAPAN vol. 010, no. 251 (E-432), 28 August 1986 (1986-08-28) & JP 61 079215 A (MATSUSHITA ELECTRIC IND CO LTD), 22 April 1986 (1986-04-22)
- "INTERNATIONAL STANDARDS IEC 60065" IEC 60065, XX, XX, 1998, pages 1-4, XP002970917

## Description

### Field of the invention

The present invention relates to insulating arrangements for electrical components.

As used herein, "electrical component" is intended to encompass any device whose operation involves electrical voltages and currents (and the associated electromagnetic fields). Electronic devices are thus a typical example of the electrical components to which the invention applies.

### Description of the related art

In electrical circuits so-called "supplementary insulation" is oftentimes required for individual components. This is particularly the case for those circuit arrangements requiring certain components to be located in the close proximity of e.g. the primary and/or secondary winding of a transformer.

As a rule, in prior art insulation arrangement for individual components, a basic level of insulation is achieved between the inner portion of the component and the free space surrounding the component. This mostly occurs on the component side of the circuit substrate or support (e.g. a Printed Circuit Board or PCB) onto which the component is mounted.

The effectiveness of such an arrangement relies not only on the wall thickness of the insulating element (which walls are typically comprised of a plastic material) but also on the position of the connection pins of the component with respect to the layout of the basis portion of the component.

The required "creepage" dictates the distance of the pins with respect to the boundary, that is the periphery of the component.

For instance, in certain capacitors such as those capacitors having a cup-shaped casing or package, the connecting pins have a sufficient distance from the longitudinal sides when the capacitor is thicker than about 7 mm. To the contrary, a typical distance from the transverse sides may be as small as 1 mm, which is about equal to the insulation wall thickness. By necessity, the casing or package must be supplemented with an additional length of 6 mm in order to achieve a sufficient length for creepage also on the transverse sides. The additional, unexploited length represents a major drawback when higher insulation levels or classes are being sought.

This problem has been solved so far by associating to the component an additional external insulating structure. This structure may be in the form of a special plastic box having separation walls intended to extend between the critical locations in the circuit as well as a base plate provided with a perforation prepared for the pins that corresponds to the portion of the circuit substrate concerned. The critical components are subsequently introduced into the box.

An alternative arrangement provides for insulating sheaths being applied onto the critical components.

In either case, the process leading to the provision of the supplementary insulation does not lend itself to be performed in a completely automated way. This may be due e.g. to the insulation boxes being obtrusive to the grippers used for the automatic assembly process of the circuit. Similarly, flexible insulating sheaths are not particularly suitable for automatic assembly. As a consequence, a fully automated assembly operation of a component that has been provided (manually) with that sheath is not practically feasible.

Mounting the critical components on the support substrate (e.g. printed circuit board) sufficiently apart from one another to provide the required insulation, simply solves the problem of insulation in another way. Quite obviously, this solution turns out to be largely impractical as it goes against the continuous trend towards making components and circuits increasingly smaller. In that respect, it is worth to point out that a marked tendency in current technology leads to individual components being no longer provided with packages, whereby components are simply coated by means of e.g. powdered resin, possibly in view of a side-wise mounting. As these components can be flexed very easily, this practically annihilates the possibility of providing any appreciable spacing between adjacent components.

More specifically, the invention relates to an insulating arrangement according to the preamble of claim 1, which is known e.g. from EP-A-1 313 113.

### Object and summary of the invention

The object of the invention is thus to provide an improved insulation arrangement for electrical components that effectively overcomes the drawbacks of the prior art arrangements discussed in the foregoing.

According to the present invention, that object is achieved by means of an arrangement having the further features set forth in claim 1. Advantageous developments of the invention formed the subject matter of the sub-claims dependent thereon. The claims annexed herewith represent an integral part of the

### disclosure of the invention.

In brief, the arrangement described herein provides a casing structure for electrical components that, in contrast to the prior art, is in a position to ensure not only basic insulation, but also supplementary insulation. This by acting radial outwardly (that is from inside to outside component), typically toward the free space on the component side of the circuit substrate (that is, in a current arrangement, a printed circuit board or PCB). The insulated component can be either a single, self-contained component or a component/device including several portions. A case in point in that respect is represented by transformers, for instance of the type including two-part cores adapted to be mounted from the outside. In such a transformer, now the insulation is newly designed by taking into account adjusting the core to the role played by the surrounding (free) space. Such a transformer includes a cup-shaped element as well as an element substantially in the form of a hollow spindle - and each winding or winding assembly may have a respective associated spindle. Such a transformer may also include three separate parts forming the insulating structure between the two windings or winding assemblies and play the role of an insulation barrier even in combination with other components located nearby. In the prior art, in particular cases these outside-cores are related to the secondary winding, in the rest of the cases (said in most cases) to the primary winding. Such a transformer is disclosed e.g. in EP-0 793 243-B1.

It will however be appreciated that the arrangement of the invention is in no way limited to providing insulation in the case of transformers. In fact, the arrangement of the invention is adapted to provide supplementary insulation (as defined e.g. in the international standards EN60065, EN60742, EN61558, EN61347-1, EN61347-2-2) for any type of electrical components such as e.g. electronic components and devices.

### Brief description of the annexed drawings

The invention will now be described, by way of example only, by referring to the enclosed figures of the drawing, wherein:
- Figure 1 shows a first comparative example; specifically, figure 1 includes three portions designated a), b), and c) wherein part a) is a general perspective view of an electrical component as described herein, while portions b) and c) are longitudinal and transverse cross-sectional views of the same component;
- Figure 2 shows a second comparative example; again, figure 2 includes three portions representative of a general perspective view (portion a), and longitudinal and transverse cross-sectional views (portions b and c) of the component in question;
- Figures 3 and 4 show two further comparative example ; a longitudinal cross-sectional view (portion b) and a transverse cross-sectional view (c) are shown for both alternative embodiments;
- Figure 5 shows still another comparative example, of which a general perspective view (portion a) and a longitudinal cross-sectional view (portion b) are shown;
- Figure 6 is an example of the possible application of the arrangement described herein to a component such as a transformer; in Figure 6, portion a) is a transverse cross-sectional view across such a transformer, whereas portion b) is a longitudinal cross-sectional view along a line VB-VB of the view of portion a); portion c) is a sectional view along a line VC-VC of portion b) and a) respectively, whereas portion d) is an enlarged view of the view of portion c) indicated by the arrow VD;
- Figures 7 and 8 further detail the possible application of the arrangement described herein to a transformer, each of Figures 7 and 8 includes various portions designated a) to d); in both Figures 7 and 8, portion a) is a general perspective top view, the portion designated b) is an orthogonal bottom view, and the portions designated c) and d) are lateral elevational views from observation points orthogonal to each other;
- Figure 9 supplements Figures 7 and 8 in detailing the application of the arrangement described herein to a transformer; and
- figures 10 to 14 schematically represent various possible developments of the arrangement described herein.

### Detailed description of preferred embodiments of the invention

The following is a detailed description of various possible examples of an insulating arrangement adapted to be used in connection with an electrical component generally designated C. This may be any component or device in respect of which electrical insulation, and specifically "supplementary insulation" is to be provided.

Essentially the various arrangements described herein rely on the basic concept of optimising the component in such a way that it "bridges" the insulation barrier.

Such an arrangement includes a casing 10 having a lateral insulating wall thickness, which is preferably substantially uniform and typically equal or larger than a given value S.

By way of example, S may be between 0.2 and 2.0 mm, preferably between 0.5 and 1.5 mm, still preferably between 0.8 and 1.0 mm., a particularly preferred value being about 0.8 mm.

In the most common case the casing 10 is comprised of an insulating material such as a plastics material.

As used herein "insulating material" indicates any material adapted to provide electrical insulation (e.g. with a typical resistivity in excess of 3*10⁹ Ohm.cm).

Typical examples of plastic insulating materials adopted for use in the invention are Polycarbonate, Polyamide or Polybutileneterephtalate.

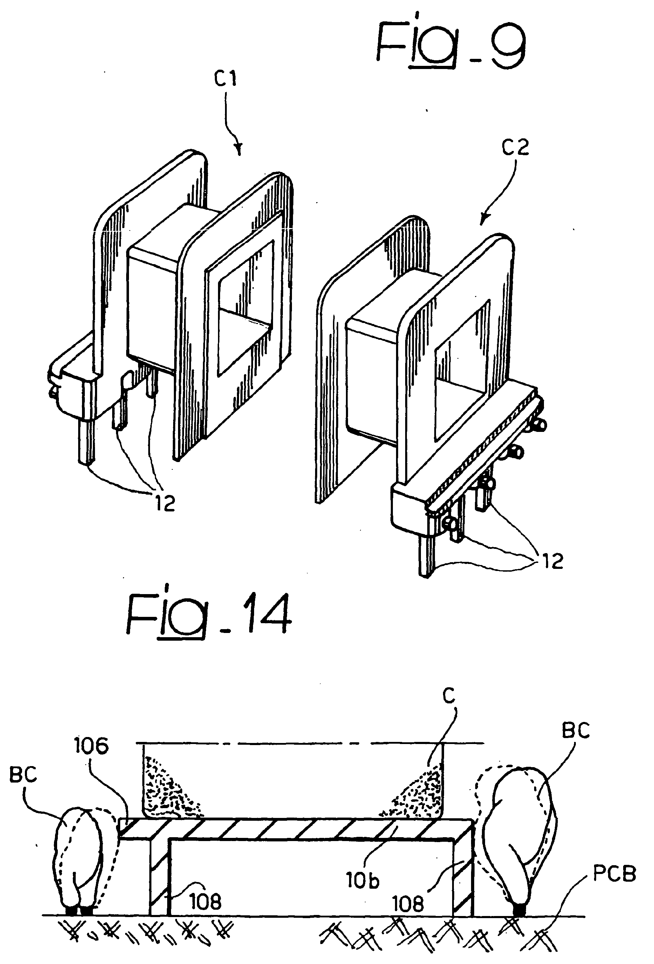

The components C considered herein have associated a set of pins 12 to provide electrical connections to and from the component C, in addition to the capability of mounting the component C onto a support substrate such as a printed circuit board PCB (see for instance Figure 14). This occurs by inserting the pins 12 into corresponding receiving holes (not shown) provided in the PCB.

In the arrangement described herein, any of the pins (to be more precise, any of the outer sides or surfaces of the pins 12) have a distance to the lower peripheral rim of the component C. This distance has a minimum value of e.g. higher or equal to a given value x for all of the pins 12 of the component C.

By way of example, x may be between 2.5 and 8.0 mm, preferably between 2.5 and 6.0 mm, still preferably between 3.0 and 4.8 mm., a particularly preferred value being about 3 mm.

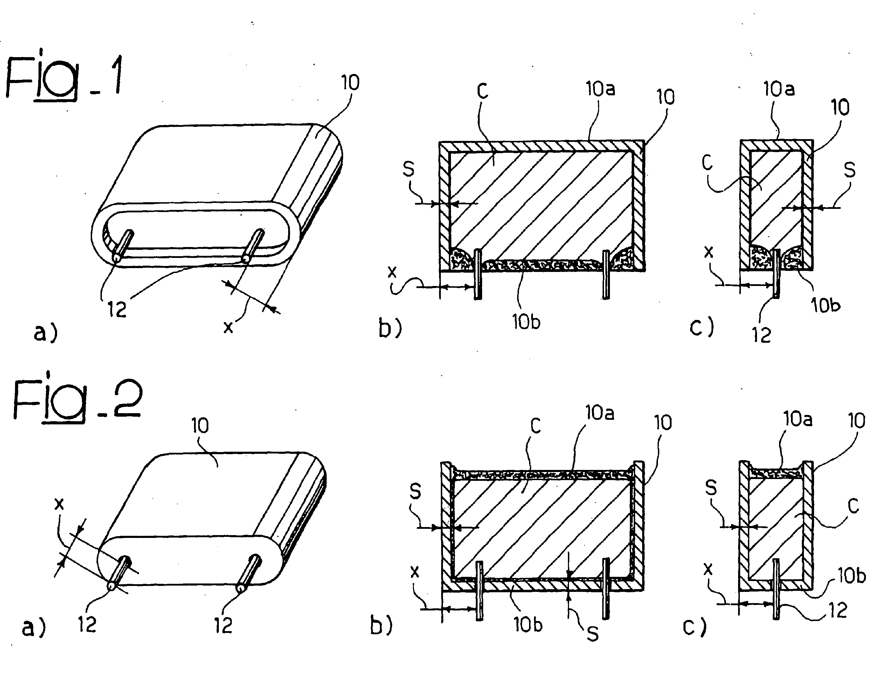

The thickness of the insulating casing 10 (that is the thickness designated S in the drawings of Figures 1 to 5) is usually included in determining the value of the distance x.

The distance x generally identifies the minimum lengths of any direction of the required "creepage", connecting any of the pins 12 starting from the outer perimeter or boundary of the base portion of the component.

In the exemplary arrangement shown in Figure 1, the casing 10 is essentially comprised of a lateral wall (having an oval shape overall, which may apply e.g. to components such as e.g. capacitors) wherein the casing 10 has a cup shape. The wall thickness S ensuring the "supplementary insulation" is preferably constant around the component C and provided at the lateral wall only of the casing 10, whereby the desired supplementary insulation is ensured primarily radial to the component C.

The casing 10 may have a top wall 10a of ordinary thickness (i.e. less than S, in most cases half of S), whereas the bottom wall 10b of the casing is generally comprised of so-called potting resin sealing the component C within the casing 10. The potting layer preferably exhibits an increased thickness in the lateral regions between the pins 12 and the outer lower rim of the casing 10 because any resin is not considered as a means to reduce the creepage.

The alternative example shown in Figure 2 provides for the casing 10 being in the form of a cup or vat with an integral bottom wall 10b having the same thickness S of the lateral wall of the casing 10. Such a bottom wall is also provided with the passage openings for the pins 12.

In the case of the example shown in Figure 2, the additional insulation is provided also towards the mounting substrate (e.g. a PCB) of the component C. Therefore, an increased thickness of the former lower wall 10b from Figure 1 is avoided here. In this case, the top surface/wall 10a of the casing 10 may be comprised of a potting resin similar to the lower surface/wall 10b of the example of Figure 1. A possibly critical point of the example of Figure 2 lies in that is the thickness of any resin possibly used therein cannot be specified with a high degree of accuracy, e.g. guaranteed having the value of half-S or S respectively.

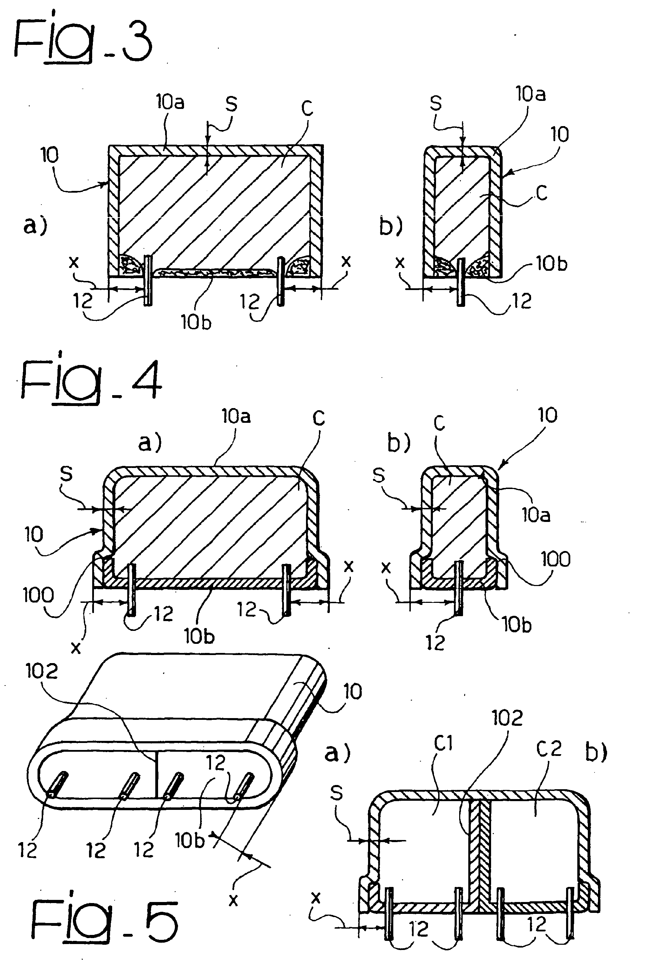

The views of Figure 3 schematically exemplify how the example shown in Figure 1 may be modified with the provision of a top wall 10a having the desired thickness S in order to ensure the supplementary insulation also with respect to the space above the component C.

The combination of a good exploitation of the available space in the casing 10 with the supplementary insulation achieved around the component C results in another example which may lead to a two-part construction as schematically shown in Figure 4. There, a casing 10 is shown comprising an upper cup-shaped portion having a flared mouth portion 100 (facing downwardly, in the example shown). The flared mouth portion 100 is adapted to receive the bottom wall 10b with the pins 12 extending therethrough. In this case the width or distance x is to be achieved by two different paths. The first path is the creepage from the lower peripheral rim of the casing 10 to any of the outer sides or surfaces of the pins directly above the component side of the circuit substrate or support, e.g. a printed circuit board or PCB. The second path starts from the lower peripheral rim of the casing as well, includes the thickness S of the casing 10 plus the height of the flared mouth portion 100 plus the difference between the radial dimension of the narrower, upper body portion of the casing 10 and the enlarged, flared mouth portion 100 as highlighted in Figure 4, and ends in the inner space of the casing 10, where the lower wall 10b ends and the component C starts.

In Figure 5 the possibility is shown of modifying the arrangement of Figure 4 (and any of the arrangements of Figures 1 to 3) in order that the casing 10 includes an intermediate partitioning wall 102. In that way, two volumes or chambers are created within the casing 10 to receive two separate components C1 and C2 each provided with a respective set of pins 12.

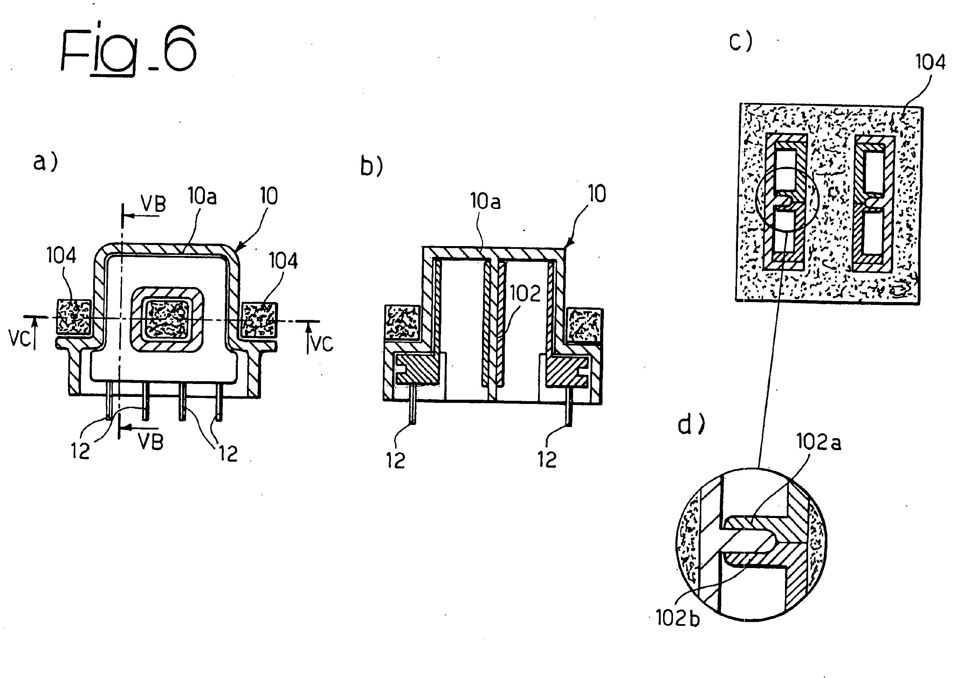

The views of Figure 6 highlight the possibility of applying an arrangement essentially as shown in Figure 5 to a component comprised of a transformer including primary and secondary windings or winding assemblies associated with a "figure-of-eight" core 104 (see especially the view of Figure 6c). Each winding or winding assembly has respective pins 12 extending from the lower side of the casing 10.

Those of skill in the art will promptly appreciate that, while constituting a presently preferred embodiment, referring the transformer structure of Figure 6 to the arrangement of Figure 5 is in no way a mandatory arrangement. In fact, a transformer structure shown in Figure 6 may have an associated casing 10 of the kind shown in any of the Figures 1,3 or 4. This casing 10 has been developed further into the cap of the transformer insulating system, and especially the bottom wall 10b has been modified into the inner portion of the insulating system surrounding the centre leg of the core, i.e. into the coil former.

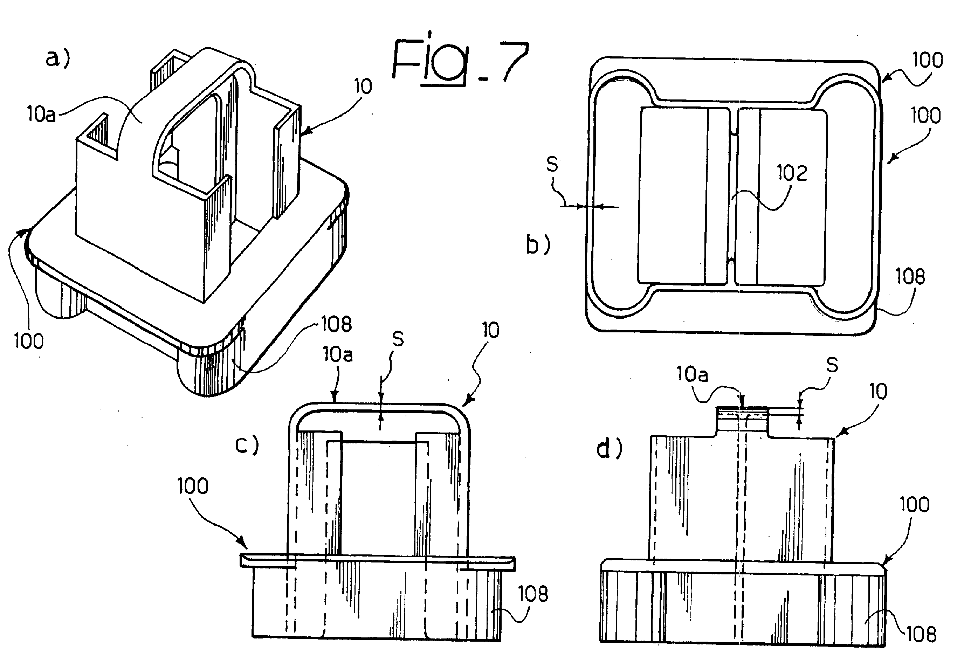

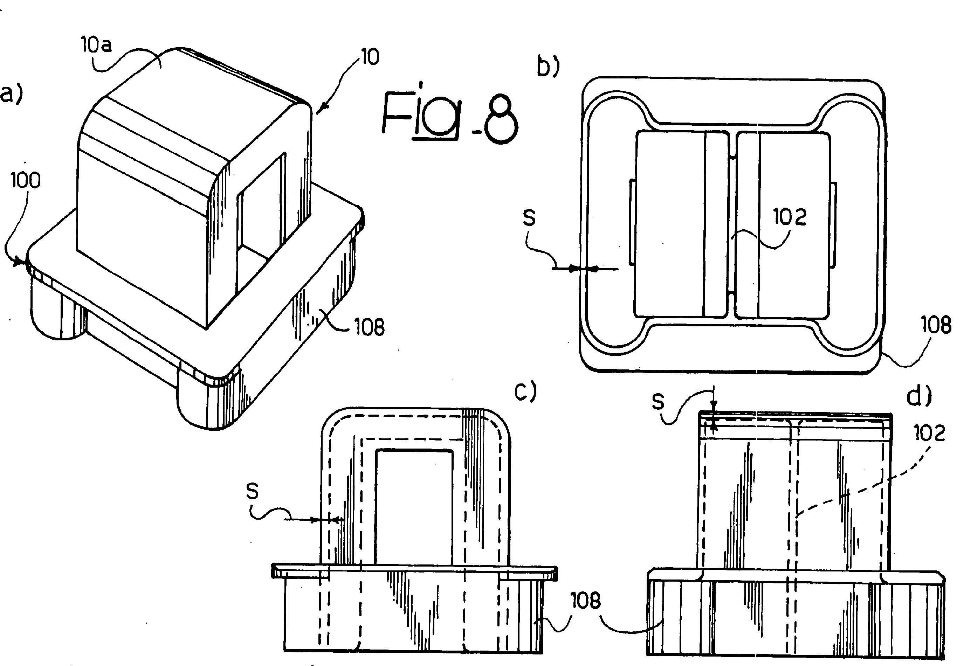

The representations of Figures 7 and 8 highlight the possibility of providing a transformer casing 10 having a desired thickness S throughout the peripheral walls of the casing, i.e. in all those directions (radial towards the core and the free space, axial towards the top (only Figure 8), axial towards the core, and so on) in respect of which the (supplementary) insulating function is to be achieved.

Figure 9 shows in greater detail the two coil formers or "bobbins" of a transformer which have substantially the shape of hollow spindles, provided with respective connection pins 12. These two coil formers comprise respective portions C1 and C2 adapted to be associated with a casing 10 as shown in the views of Figures 7 and 8.

Such a general structure of a transformer shown essentially corresponds to the "Lean-Transformer" structure disclosed e.g. in EP-0 793 243-B1.

In the specific case shown here, however, the transformer core can be regarded in term of design as equivalent to the surrounding ambience, which represents the requirement for the supplementary insulation purpose between both windings or winding assemblies and the core as well as the same purpose between all active inner parts of the component or device and the lateral free space described herein.

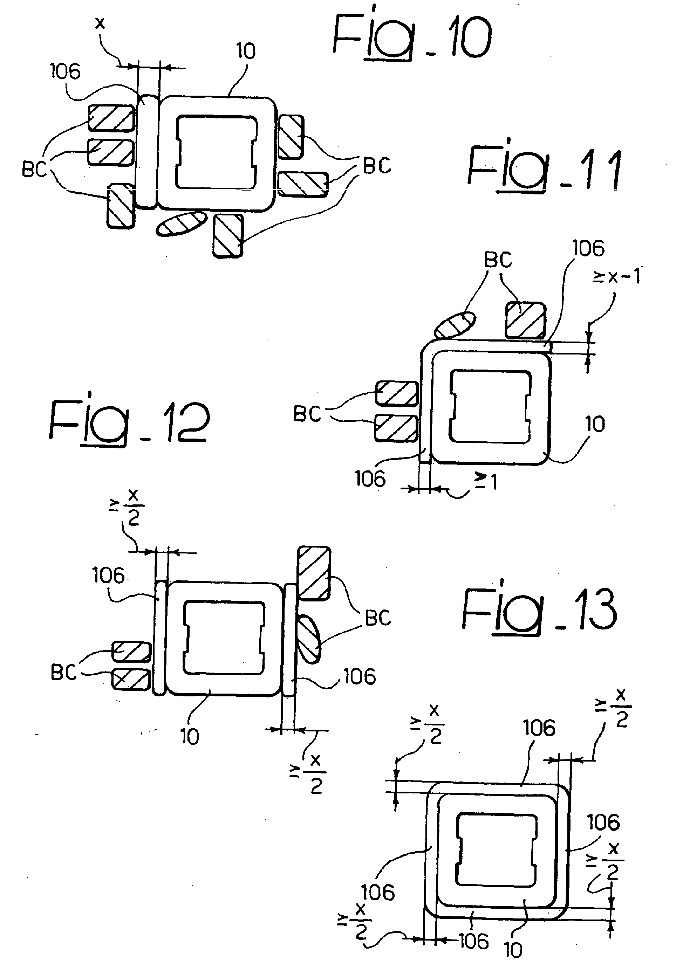

The drawings of the figures 10 to 14 (to be described in further detail in the following) highlight the possibility for the casing 10 also to act as an element keeping neighbouring components designated BC as a whole at a given distance from the component C.

Whatever the specific embodiment considered, the plastic casing 10 is in a position to provide - on the component side of the circuit support (such as a PCB) onto which a given component C is mounted - a reliable "supplementary insulation" between any active portion of the component C and the surrounding space in all directions. Similarly, insulation is also provided at the surface of the circuit support in respect of all the possible directions of creepage that may extend from the pins 12 of the component C.

Specifically, the insulation provided is a "supplementary insulation" in conformity with standards such as EN60065, EN60742, EN61558, EN61347-1, and EN61347-2-2. In that respect, at least the lateral walls of the casing 10 have a given thickness S (typically at least 0.8 mm) and extend down to the circuit substrate: this, of course, while leaving the typical "stand-off" of about 0.3 mm to the surface of the circuit substrate.

Preferably, the insulation coverage at the lower side of the component C, where the pins 12 are located, is achieved by means of a bottom wall 10b having the same thickness S of the lateral walls (see in that respect also the arrangements shown in Figures 2 and 4). This result can be achieved also at the top wall 10a of the casing 10 as shown e.g. in Figures 3 and 4.

This while also ensuring that the creepage coming down to the pins 12 starting from the outer boundary of the casing 10 have a given length in excess of a minimum value (for instance at least 3 mm) adapted to ensure the proper degree of insulation sought.

As shown e.g. in Figures 4 and 5, the casing 10 may be arranged to include two elements adapted to be connected in a form-mating relationship when the component is assembled:
see, in that respect, the enlarged view of a Figure 6d showing two separate elements 102a, 102b, of the insulating wall. These elements 102a, 102b are assembled in a face-to-face relationship to comprise the separating wall 102.

A similar arrangement lends itself to provide at the sides of the casing (e.g. at the flared mouth portion 100 shown in Figure 4) a labyrinth in the area of connection of two elements of the casing 10.

The arrangement described herein does not place any strict requirements on mounting the pins 12. Such pins can be possibly inserted (resorting to known techniques) in the casing 10 including potting resins as schematically shown e.g. in Figures 1 and 3, or into parts thereof, especially into the "lower wall" 10b from Figures 4, 6, and 9 respectively. The pins 12 may also wholly or partly be carried by the component or components C enclosed in the casing 10. In another embodiment of the casing 10, the lower wall 10b or at least one coil former provided therein may contain sockets which directly carry and form the connections coming out like pins directly from the component(-s) or device(-s) C, i.e. being integral parts of the component(-s) or device(-s) C, e.g. the tinned endings of transformer windings.

As indicated, the specific nature of the component C is per se of no momentum for the purpose of the invention. Typically, active components C are being considered, but arrangements including at least in part passive or reactive components fall within the scope of the invention.

The component C can be in the form of a transformer (see specifically Figures 6 to 9) of any known type. This may apply e.g. to transformers having a core consisting of two or more portions with E- or U-shaped longitudinal cross-sections. Transformers including E-I- or U-I-shaped cores are similarly adapted for use within the framework of the invention.

The foregoing also applies to transformers including one element of a general cup-like shape at least one additional element in the form of a hollow spindle, wherein the cup-shaped element completely surrounds at least laterally the various other elements and components (as is the case of the arrangement shown in Figure 7, in particularly Figure 7a).

A further embodiment includes one cup-shaped element that additionally covers the upper side of all other elements and components (as is the case of the arrangement shown in Figure 8, in particularly Figure 8a).

Thus, from the view point of insulation, the transformer core can be designed into the whole circuit as referring to the free space, that is by assuming that all the surfaces at which the casing 10 comes into contact with or at least in close proximity to the core have a sufficient wall thickness (for instance, equal or more than 0.8 mm) to ensure the required insulation. This while also ensuring that all the possible creepage paths towards the core from an active part have at least a minimum length (for instance, equal or more than 3 mm).

As best shown in figures 6 and 9, the insulation between the inner layer of the windings or the winding assemblies and the core as well as between the sides (flanges) of the windings or winding assemblies and the "shoulders" of the core is ensured by at least one element in the form of a hollow spindle. This completely surrounds one of the arms or tongs of the core (usually the central one or the most compact one). In the same way the insulation between adjacent windings or winding assemblies, as required by the specific application, is at least partly ensured by the double intermediate wall of the spindle-shaped element. This is not one of the side walls in direct proximity of the core shoulders and thus defines the sides of at least two windings or winding assemblies.

In the same way, the insulation is ensured between the outer layer of the winding or the winding assemblies and the core together with the lateral free space on the component side of the circuit support; this, when required, together with the upper free space immediately above the transformer:
This result is ensured primarily by the cup-shaped element of the casing, thanks to the equivalence (from the point view of insulation) of the core with the surrounding space, at all the lateral walls (and possibly also the upper wall). In fact, all of these have the minimum wall thickness that provides the required insulation (for instance a thickness of 0.8 mm or more).

As shown e.g. in Figure 9, the transformer to be insulated includes two substantially hollow spindle-shaped elements (designated C1 and C2 in Figure 9) that may be brought to abut directly each against the other on the same arm of the core. The corresponding lateral walls directly facing each other may jointly provide the desired insulation (according to the application) of the respectively associated windings (or winding assemblies) for at least a part of the contact surface.

For those parts/areas of the contact surfaces or intermediate walls for which the insulation provided between the two adjacent windings or winding assemblies is not sufficient, the wall portion of the cup-shaped element is extended by means of additional wall parts orthogonal to its outer wall, as described in Figures 6 to 8. These additional wall parts therefore are in a position to fit in between the double intermediate wall or in between the side walls of two adjacent hollow spindle-shaped elements which constitute as parts of the insulation. By this way, between adjacent windings or winding assemblies, or between adjacent components or devices inside the casing 10, there can be achieved even higher levels of insulation, e.g. "reinforced insulation" or "double insulation" according the same standards mentioned above

As shown in figure 10, in the case that the component C is an insulation transformer comprising an external core, a part of the casing 10, such as a protruding rim 106 extending from the core, may at least partly cooperate in providing an insulation barrier in respect of neighbouring components BC.

The protruding formation or rim 106 may be simply an extension of the flared mouth portion 100 of the cup-shaped element of the casing 10 which can form a sort of "terrace" wall 106 of the casing, and which supports the core (see also Figure 14). This effect can be achieved by the protruding formation 106 alone or in cooperation with a shift of a portion of the lateral wall 108 of the casing 10 that extends between the terrace wall 106 and the component side of the circuit substrate. This shift has a direction to extend the core (see Figure 14, right side).

The formation 106 can be dimensioned in such a way to provide the required creepage and clearance distance (for instance at least 3 mm or more) at all the sides of the casing 10 where components BC are mounted that may become "critical" for insulation purposes.

This arrangement may have a particular significance, when the component C is an insulation transformer, and the components BC are possibly associated with the primary and/or secondary winding or winding assembly of this transformer.

It will be appreciated that the scope of the invention includes insulation arrangements extending through complete circuit systems, i.e. to the surrounding components BC, and/or the achievement of levels of insulation even higher than the "supplementary insulation", e.g. to the "double or reinforced insulation", all the levels mentioned herein being defined in the same standards already referred to above.

The arrangement described herein somehow "takes care" of the components BC located aside, by providing the lateral wall 108 from the rim 106 down to the common circuit support, thus guaranteeing the creepage and clearance distances and the thickness through insulation not only from the pins plus winding wires to the core, but even from the pins plus winding wires to these components BC aside. This additional performance enables a neighbouring component BC to bridge the insulation barrier in parallel to the component C in question, e.g. the insulation transformer, like a Y-capacitor or an opto-coupler. The reason is that the body of such a second bridging component faces both sides of the insulation barrier, and therefore the advantage of having its body on the same side of the insulation barrier like the adjacent pin of component C suddenly converts itself into its contrary.

Figures 11 to 13 highlight the fact that the casing 10 may include at least two sides having respective protruding formations 106 extending the core. The protruding formations 106 in question may extend along different (not necessarily contiguous, e.g. opposed) sides of the core, possibly with different degrees of extension.

For instance, in the case of the arrangement shown in Figure 11 it will be assumed that one formation 106 protrudes about 1 mm away from one side of the core while another formation 106 protrudes away by a different amount (for instance 2 mm or more) form another side of the core. This is advantageous to achieve the desired clearance x of at least 3 mm between such components associated to both sides of the insulation barrier which all would be neighbouring components BC of component C, i.e. of the insulation transformer, when its core as a conductive part reduces the distances "in air" directly between the BC-components down to the clearance x.

Figure 12 shows that the concepts outlined in the foregoing may be freely combined, for instance by providing at two opposite sides of the casing 10 (such as two sides intended to correspond to the primary and secondary windings of the transformer located within the casing 10), two opposed formations 106 protruding from the core over a distance of equal or more than 1.5 mm, i.e. over the half of the required clearance or more.

Figure 13 further shows how this basic principle can be applied on all of the four sides of a rectangular or square casing C.

In that respect, those of skill in the art will promptly appreciate that the principles of the invention are in no way limited to casings 10 having rectangular or almost rectangular (for instance o-shaped) shapes. In fact the invention may be applied to casings of any shape.

Figure 14 shows the possible joined cooperation of a laterally protruding formation 106 and the portion 108 of the vertical lateral wall of the casing 10 located between the rim 106 and the circuit support in order to jointly ensure a proper insulation of the component BC with respect to the core which may shorten the insulation barrier when missing the proper creepage and clearance distances. But now these proper distances are "sealed" by the laterally protruding formations 106 and, possibly, by a vertical extension 108.

For instance, the extension 108 may be dimensioned in order to keep the extension ("terrace wall") 106 of the casing at a certain distance (for instance equal or more than 7 mm) above the substrate PCB to guarantee the creepage and clearance distances between the core and almost all kinds of other neighbouring electrical or electronic components or devices. This while also ensuring that the protruding formation 106 alone (see left-hand side of figure 14) or even together with the shifted part of the lateral wall 108 (see right-hand side of figure 14) prevent any neighbouring components BC from being possibly tilted toward the core nearer than shown in dashed lines which represent the minimum permissible distances of these neighbouring components to the core, thus from being brought undesirably close to the core and injuring the creepage and clearance distances.

It will be appreciated that, for instance, the casing 10, in any possible form disclosed, may consist of at least two insulating elements, and may include a non-cup-shaped element forming a bottom wall 10b, wherein the non-cup-shaped element fits into a flared mouth portion such as the mouth portion 100 shown in figure 4. Similarly, those of skill in the art will promptly appreciate that any numerical value provided herein is to be understood with the tolerances currently associated with the related manufacturing and measuring processes. Consequently, without prejudice to the underlying principles of the invention, the details and the embodiments may vary, also significantly, with respect to what has been described and shown, by way of example only, without departing from the scope of the invention as defined by the annexed claims.

## Claims

1. An insulating arrangement for electrical components (C) including a set of contact pins (12), the arrangement including a casing (10) of an electrically insulating material, said casing (10) having a peripheral wall surrounding said component (C;C1, C2) and having a lower peripheral rim, wherein said peripheral wall has a wall thickness of at least equal to a given thickness (S), and wherein the distance of any contact pin (12) in that set to said lower peripheral rim is at least equal to a given distance (x), wherein said given thickness (S) and said given distance (x) jointly provide an electrical insulation barrier around said component (C;C1,C2), wherein said casing (10) includes a cup-shaped element, and said component (C;C1 C2) includes at least one winding or winding assembly of a transformer, **characterised in that**:
- said casing (10) includes wall portions coming into contact or at least close proximity of the transformer core (104), and said wall portions have a thickness of at least equal to said given thickness (S), and the creepage and clearance distances from any electrical component within said casing (10) to said core has a length of at least equal to said given distance (x),
- said at least one component (C) includes a transformer core (104) having two or more legs, and said casing (10) includes at least one element substantially in the form of a hollow spindle which covers completely the centre leg or another leg of said core (104) by means of a tube wall of said casing (10), which has at least one side wall defining the flange of one winding or winding assembly, wherein said tube wall completely has a wall thickness of at least equal to said given thickness (S) over the whole length at all sides of the tube, wherein all of the side walls present have at least partially a wall thickness of at least equal to said given value (S), whereby the insulation between the inner layer of the windings or the winding assemblies and said leg of the core (104) as well as between the sides of the windings or winding assemblies and the shoulders of the core is ensured by said at least one element in the form of a spindle and the insulation between the outer layer of the winding or the winding assemblies and the core together with the lateral free space on the component side of the circuit support is ensured by said cup-shaped element of said casing.

2. The arrangement of claim 1, **characterized in that** said at least one element in the form of a hallow spindle has other orthogonal intermediate walls separating several said windings or winding assemblies and wherein all intermediate walls present have at least partially a wall thickness greater than said given thickness (S).

3. The arrangement of claim 1, **characterised in that** said given thickness (S) is between 0.2 and 2.0 mm.

4. The arrangement of claim 1, **characterised in that** said given thickness (S) is between 0.5 and 1.5 mm.

5. The arrangement of claim 1, **characterised in that** said given thickness (S) is between 0.8 and 1.0 mm.

6. The arrangement of claim 1, **characterised in that** said given thickness (S) is about 0.8 mm.

7. The arrangement of any of the previous claims **characterised in that** said given distance (x) is between 2.5 and 8.0 mm.

8. The arrangement of any of the previous claims **characterised in that** said given distance (x) is between 2.5 and 6.0 mm.

9. The arrangement of any of the previous claims **characterised in that** said given distance (x) is between 3.0 and 4.8 mm.

10. The arrangement of any of the previous claims **characterised in that** said given distance (x) is about 3 mm.

11. The arrangement of any of the previous claims, **characterised in that** said electrical insulation barrier provides a supplementary insulation as defined in at least one of the EN60065, EN60742, EN61558, EN61347-1, EN61347-2-2 standards.

12. The arrangement of any of the previous claims, **characterised in that** said electrically insulating material has a resistivity in excess of 3*10⁹ Ohm.cm.

13. The arrangement of any of the previous claims, **characterised in that** said electrically insulating material is a plastic material.

14. The arrangement of any of the previous claims, **characterised in that** said electrically insulating material is selected out of the group consisting of Polycarbonate, Polyamide and Polybutileneterephtalate.

15. The arrangement of any of the previous claims, **characterised in that** said casing (10) includes at least one of a top wall (10a) and a bottom wall (10b) of the casing (10), wherein said at least one of said top (10a) and bottom (10b) walls has a wall thickness of at least equal to said given thickness (S).

16. The arrangement of either of claims 1 or 15, **characterised in that** said wall thickness at least equal to a given thickness (S) is substantially uniform.

17. The arrangement of claim 1, **characterised in that** said cup-shaped element has a flared mouth portion (100) defining an enlarged portion of the casing (10) in correspondence with said set of pins (12), wherein said enlarged portion at least partly provides said distance of any of said pins (12) in said set to said lower peripheral rim of the casing (10).

18. The arrangement of any of the previous claims, **characterised in that** said casing (10) consists of at least two insulating elements.

19. The arrangement of claim 18, **characterised in that** said casing (10) includes a cup-shaped element as well at least one non-cup-shaped element forming a bottom wall (10b) of the casing.

20. The arrangement of claim 19, **characterised in that** said casing (10) includes an element having a flared mouth portion (100) and said at least one non-cup-shaped element fits into said flared mouth portion (100).

21. The arrangement of any of the previous claims, including a plurality of electrical components (C1, C2) surrounded by said casing (10).

22. The arrangement of any of the previous claims, **characterised in that** the pins of said set (12) are at least partly mounted in said casing (10).

23. The arrangement of any of the previous claims, **characterised in that** the pins (12) of said set are at least partly carried by said component (C; C1, C2).

24. The arrangement of any of the previous claims, **characterised in that** said casing (10) includes a cup-shaped element and said casing (10) includes a top wall (10a) covering at least partially the top area of said cup-shaped element.

25. The arrangement of claim 24, **characterised in that** said top wall (10a) has a wall thickness of at least equal to said given thickness (S).

26. The arrangement of any of the previous claims, **characterised in that** said casing (10) includes, in correspondence with said lower peripheral rim, at least one protruding formation (106), whereby said at least one protruding formation (106) adds to said distance of any of said contact pins (12) in said set to said bottom peripheral rim.

27. The arrangement of claim 26, **characterised in that** said casing (10) includes at least two sides having respective protruding formations (106) extending therefrom.

28. The arrangement of claim 27, **characterised in that** said at least two sides having protruding formations (106) extending therefrom are contiguous to each other.

29. The arrangement of claim 27, **characterised in that** said at least two sides having protruding formations (106) extending therefrom are opposite to each other.

30. The arrangement of any of claims 27 to 29, **characterised in that** said protruding formations (106) extending from said at least two sides protrude over different lengths from said casing (10).

31. The arrangement of any of the previous claims, **characterised in that** said casing (10) includes an extension (108) of said peripheral wall extending away from said at least one component (C) said extension (108) providing further separation clearance with respect to at least one of:
- a support substrate (PCB) for mounting said at least one component (C), and
- any neighbouring components (BC) mounted in the vicinity of said at least one component (C) onto said support substrate (PCB).

32. The arrangement of claim 31 in combination with any of claims 26 to 30, wherein said protruding formation (106) cooperates with said extension (108) with said peripheral wall in providing further insulation clearance with respect to said neighbouring components (BC).

## Patentansprüche

1. Eine Isolieranordnung für elektrische Bauelemente (C), die einen Satz von Kontaktstiften (12) einschließt, wobei die Anordnung ein Gehäuse (10) aus einem elektrisch isolierenden Material einschließt, und wobei das Gehäuse (10) eine periphere, das Bauelement umgebende Wand (C1, C2) und einen unteren peripheren Rand aufweist, und wobei die periphere Wand eine Wandstärke aufweist, die zumindest gleich einer gegebenen Dicke (S) ist, und wobei der Abstand von jedem Kontaktstift (12) in diesem Satz bis zu dem unteren peripheren Rand zumindest gleich einer gegebenen Entfernung (x) ist, und wobei die gegebene Dicke (S) und die gegebene Entfernung (x) gemeinsam eine elektrische Isolationsbarriere um das Bauelement (C1, C2) bereitstellen, und wobei das Gehäuse (10) ein becherförmiges Element einschließt, und das Bauelement (C) zumindest eine Wicklung oder Wickelanordnung eines Transformators einschließt, **dadurch gekennzeichnet, dass**:
- das Gehäuse (10) Wandbereiche einschließt, die in Kontakt kommen, oder zumindest in die Nähe des Transformatorkerns (104), und dass die Wandabschnitte eine Dicke aufweisen, die zumindest gleich der gegebenen Dicke (S) ist, und die Kriech- und Sicherheitsabschnitte von jedem elektrischen Bauelement innerhalb des Gehäuses (10) bis zu dem Kern eine Länge aufweist, die zumindest gleich der gegebenen Entfernung (X) ist,
- das zumindest ein Bauelement (C) einen Transformatorkern (104), mit zwei oder mehreren Beinen einschließt, und das Gehäuse (10) zumindest ein Element im Wesentlichen in der Form einer hohlen Spindel einschließt, welche vollständig das mittlere Bein oder das andere Bein des Kernes (104) mittels einer Rohrwand des Gehäuses (10) bedeckt, welches zumindest eine Seitenwand aufweist, die den Flansch auf einer Wicklung oder Wicklungsanordnung definiert, wobei die Rohrwand überall eine Wandstärke von zumindest gleich der gegebenen Dicke (S) über die gesamte Länge an allen Seiten des Rohres aufweist, wobei all die bestehenden Seitenwände zumindest teilweise eine Wanddicke von zumindest gleich dem gegebenen Wert (S) aufweisen, wobei die Isolierung zwischen der innern Schicht der Wicklungen oder der Wicklungsanordnungen und das Bein des Kerns (104), ebenso wie zwischen den Seiten der Wicklungen oder Wicklungsanordnungen und den Schultern des Kernes durch zumindest ein Element in der Form einer Spindel gesichert ist, und die Isolierung zwischen der äußeren Schicht der Wicklung oder der Wicklungsanordnung und dem Kern zusammen mit dem seitlichen Freiraum auf der Baugruppenseite der Schaltungsunterstützung durch das becherförmige Element des Gehäuses gesichert ist.

2. Anordnung nach Anspruch 1, **dadurch gekennzeichnet, dass** zumindest ein Element in der Form einer hohlen Spindel andere orthogonale Zwischenwände aufweist, die einige der Wicklungen oder Wicklungsanordnungen trennt, und wobei all die bestehenden Zwischenwände zumindest teilweise eine Wanddicke größer als die gegebene Dicke (S) aufweisen.

3. Anordnung nach Anspruch 1, **dadurch gekennzeichnet, dass** die gegebene Dicke (S) zwischen 0.2 und 2.0 mm liegt.

4. Anordnung nach Anspruch 1, **dadurch gekennzeichnet, dass** die gegebene Dicke (S) zwischen 0.5 und 1.5 mm liegt.

5. Anordnung nach Anspruch 1, **dadurch gekennzeichnet, dass** die gegebene Dicke (S) zwischen 0.8 und 1.0 mm liegt.

6. Anordnung nach Anspruch 1, **dadurch gekennzeichnet, dass** die gegebene Dicke (S) um die 0.8 mm liegt.

7. Anordnung nach irgendeinem der vorherigen Ansprüche, **dadurch gekennzeichnet, dass** die gegebene Entfernung (x) zwischen 2.5 und 8.0 mm liegt.

8. Anordnung nach irgendeinem der vorherigen Ansprüche, **dadurch gekennzeichnet, dass** die gegebene Entfernung (x) zwischen 2.5 und 6.0 mm liegt.

9. Anordnung nach irgendeinem der vorherigen Ansprüche, **dadurch gekennzeichnet, dass** die gegebene Entfernung (x) zwischen 3.0 und 4.8 mm.

10. Anordnung nach irgendeinem der vorherigen Ansprüche, **dadurch gekennzeichnet, dass** die gegebene Entfernung (x) um die 3 mm beträgt.

11. Anordnung nach irgendeinem der vorherigen Ansprüche, **dadurch gekennzeichnet, dass** die elektrische Isolierungsbarriere eine zusätzliche Isolierung bereitstellt, wie in zumindest einem der EN60065, EN60742, EN61558, EN61347-1, EN61347-2-2 Standards definiert ist.

12. Anordnung nach irgendeinem der vorherigen Ansprüche, **dadurch gekennzeichnet, dass** das elektrisch isolierende Material einen spezifischen Widerstand von mehr als 3*10⁹ Ohm.cm aufweist.

13. Anordnung nach irgendeinem der vorherigen Ansprüche, **dadurch gekennzeichnet, dass** das elektrisch isolierende Material ein Plastikmaterial ist.

14. Anordnung nach irgendeinem der vorherigen Ansprüche **dadurch gekennzeichnet, dass** das elektrisch isolierende Material, aus der Gruppe, bestehend aus Polycarbonat, Polyamid und Polybutileneterphetalat ausgewählt ist.

15. Anordnung nach irgendeinem der vorherigen Ansprüche, **dadurch gekennzeichnet, dass** das Gehäuse (10) zumindest eine von einer oberen Wand (10a) und einer unteren Wand (10b) des Gehäuses (10) einschließt, wobei zumindest eine der oberen (10a) und der unteren (10b) Wände eine Wandstärke von zumindest gleich der gegebenen Dicke (S) aufweist.

16. Anordnung nach entweder Anspruch 1 oder 15, **dadurch gekennzeichnet, dass** die Wanddicke zumindest gleich einer gegebenen Wanddicke (S) im Wesentlichen gleichmäßig ist.

17. Anordnung nach Anspruch 1 **dadurch gekennzeichnet, dass** das becherförmige Element einen glockenförmigen Öffnungsabschnitt (100) aufweist, der einen vergrößerten Abschnitt des Gehäuses (10) in Übereinstimmung mit dem Satz von Stiften (12) definiert, wobei der vergrößerte Abschnitt zumindest teilweise die Entfernung von irgendeinem der Stifte (12) in dem Satz bis zu dem unteren peripheren Rand des Gehäuses (10) bereitstellt.

18. Anordnung nach irgendeinem der vorherigen Ansprüche, **dadurch gekennzeichnet, dass** das Gehäuse (10) aus zumindest zwei isolierenden Elementen besteht.

19. Anordnung nach Anspruch 18 **dadurch gekennzeichnet, dass** das Gehäuse (10) ein becherförmiges Element, ebenso wie zumindest ein nicht-becherförmiges Element einschließt, welches eine untere Wand (10b) des Gehäuses (10) bildet.

20. Anordnung nach Anspruch 19 **dadurch gekennzeichnet, dass** das Gehäuse (10) ein Element mit einem glockenförmigen Öffnungsabschnitt (100) einschließt, und dass zumindest ein nicht-becherförmiges Element in den glockenförmigen Öffnungsabschnitt (100) passt.

21. Anordnung nach irgendeinem der vorherigen Ansprüche, die eine Mehrzahl von elektrischen Komponenten (C1, C2) einschließt, die von dem Gehäuse (10) umgeben werden.

22. Anordnung nach irgendeinem der vorherigen Ansprüche, **dadurch gekennzeichnet, dass** die Stifte des Satzes 12 zumindest teilweise in dem Gehäuse (10) befestigt sind.

23. Anordnung nach irgendeinem der vorherigen Ansprüche, **dadurch gekennzeichnet, dass** die Stifte (12) des Satzes zumindest teilweise durch die Komponente (C; C1, C2) getragen werden.

24. Anordnung nach irgendeinem der vorherigen Ansprüche, **dadurch gekennzeichnet, dass** das Gehäuse (10) ein becherförmiges Element einschließt, und dass das Gehäuse (10) eine obere Wand (10a) einschließt, die zumindest teilweise das obere Gebiet des becherförmigen Elements bedeckt.

25. Anordnung nach Anspruch 24, **dadurch gekennzeichnet, dass** die obere Wand (10a) eine Wanddicke von zumindest gleich der gegebenen Dicke (S) aufweist.

26. Anordnung nach irgendeinem der vorherigen Ansprüche, **dadurch gekennzeichnet, dass** das Gehäuse (10), in Übereinstimmung mit dem unteren peripheren Rand, zumindest ein vorstehendes Gebilde (106) einschließt, wobei zumindest ein vorstehendes Gebilde (106) zu der Entfernung von irgendeiner der Kontaktstifte (12) in dem Satz bis zu dem unteren peripheren Rand addiert wird.

27. Anordnung nach Anspruch 26, **dadurch gekennzeichnet, dass** das Gehäuse (10) zumindest zwei Seiten mit jeweiligen vorstehenden Gebilden (106) einschließt, die sich davon erstrecken.

28. Anordnung nach Anspruch 27, **dadurch gekennzeichnet, dass** zumindest zwei Seiten mit vorstehenden Gebilden (106), die sich davon erstrecken, zueinander benachbart sind.

29. Anordnung nach Anspruch 27, **dadurch gekennzeichnet, dass** zumindest zwei Seiten mit vorstehenden Gebilden (106), die sich davon erstrecken, einander gegenüber liegen.

30. Anordnung nach irgendeinem der Ansprüche 27 bis 29, **dadurch gekennzeichnet, dass** die vorstehenden Vorsprünge (106) sich von zumindest zwei Seiten erstrecken, die über verschiedene Längen von dem Gehäuse (10) hervorstehen.

31. Anordnung nach irgendeinem der vorherigen Ansprüche, **dadurch gekennzeichnet, dass** das Gehäuse (10) eine Verlängerung (108) der peripheren Wand einschließt, die sich weg von der zumindest einen Baugruppe (C) der Verlängerung (108) erstreckt, und weiteren Trennungsabstand bereitstellt in Bezug zumindest einem von:
- einem Unterstützungssubstrat (PCB) zur Befestigung der zumindest einen Komponente (C), und
- irgendwelche benachbarten Komponenten (BC), die in der Nähe der zumindest einen Komponente (C) auf dem Unterstützungssubstrat (PCB) befestigt sind.

32. Anordnung nach Anspruch 31, in Kombination mit irgendeinem der Ansprüche 26 bis 30, wobei das vorstehende Gebilde (106) mit der Verlängerung (108) mit den peripheren Rändern zusammenarbeitet, um weiteren Isolierungsabstand in Bezug zu den benachbarten Komponenten (BC) bereitzustellen.

## Revendications

1. Agencement isolant destiné à des composants électriques (C) comprenant un ensemble de broches de contact (12), l'agencement comportant un boîtier (10) fait en une matière électriquement isolante, ledit boîtier (10) présentant une paroi périphérique entourant ledit composant (C ; C1, C2) et ayant un rebord périphérique inférieur, dans lequel ladite paroi périphérique a une épaisseur de paroi au moins égale à une épaisseur donnée (S), et dans lequel la distance entre une broche de contact (12) quelconque de cet ensemble de broches et ledit rebord périphérique inférieur est au moins égale à une distance donnée (x), dans lequel ladite épaisseur donnée (S) et ladite distance donnée (x) constituent conjointement une barrière d'isolement électrique autour dudit composant (C ; C1, C2), dans lequel ledit boîtier (10) comprend un élément en forme de cuvette et ledit composant (C ; C1, C2) comprend au moins un enroulement ou un ensemble d'enroulement d'un transformateur, **caractérisé en ce que** :
- ledit boîtier (10) comprend des parties de paroi venant en contact avec le noyau de transformateur (104) ou du moins à proximité immédiate de celui-ci, lesdites parties de paroi ayant une épaisseur au moins égale à ladite épaisseur donnée (S), et les distances de fuite en surface et les écartements entre un composant électrique quelconque situé dans ledit boîtier (10) et le noyau ayant une longueur au moins égale à ladite distance donnée (x),
- ledit au moins un composant (C) comprend un noyau de transformateur (104) ayant deux branches ou plus, et ledit boîtier (10) comprend au moins un élément sensiblement en forme de mandrin creux qui couvre complètement la branche centrale ou une autre branche dudit noyau (104) au moyen d'un paroi tubulaire dudit boîtier (10), qui présente au moins une paroi latérale définissant la joue d'un enroulement ou d'un ensemble d'enroulements, dans lequel ladite paroi tubulaire a entièrement une épaisseur de paroi au moins égale à ladite épaisseur donnée (S) sur la totalité de la longueur au niveau de tous les côtés du tube, dans lequel toutes les parois latérales ont au moins en partie une épaisseur de paroi au moins égale à ladite valeur donnée (S), si bien que l'isolement entre la couche intérieure des enroulements ou des ensembles d'enroulements et ladite branche du noyau (104) ainsi qu'entre les côtés des enroulements ou des ensembles d'enroulements et les épaulements du noyau est assuré par ledit au moins un élément sous la forme d'un mandrin, et que l'isolement entre la couche extérieure des enroulements ou des ensembles d'enroulements et le noyau ainsi que l'espace latéral libre du côté composants du support de circuit est assuré par ledit élément en forme de cuvette dudit boîtier.

2. Agencement selon la revendication 1, **caractérisé en ce que** ledit au moins un élément sous la forme d'un mandrin creux présente d'autres parois intermédiaires orthogonales séparant plusieurs desdits enroulements ou ensembles d'enroulements, et dans lequel toutes les parois intermédiaires existantes ont au moins en partie une épaisseur de paroi supérieure à ladite épaisseur donnée (S).

3. Agencement selon la revendication 1, **caractérisé en ce que** ladite épaisseur donnée (S) est comprise dans la fourchette de 0,2 à 2,0 mm.

4. Agencement selon la revendication 1, **caractérisé en ce que** ladite épaisseur donnée (S) est comprise dans la fourchette de 0,5 à 1,5 mm.

5. Agencement selon la revendication 1, **caractérisé en ce que** ladite épaisseur donnée (S) est comprise dans la fourchette de 0,8 à 1,0 mm.

6. Agencement selon la revendication 1, **caractérisé en ce que** ladite épaisseur donnée (S) est d'environ 0,8 mm.

7. Agencement selon l'une quelconque des revendications précédentes, **caractérisé en ce que** ladite distance donnée (x) est comprise dans la fourchette de 2,5 à 8,0 mm.

8. Agencement selon l'une quelconque des revendications précédentes, **caractérisé en ce que** ladite distance donnée (x) est comprise dans la fourchette de 2,5 à 6,0 mm.

9. Agencement selon l'une quelconque des revendications précédentes, **caractérisé en ce que** ladite distance donnée (x) est comprise dans la fourchette de 3,0 à 4,8 mm.

10. Agencement selon l'une quelconque des revendications précédentes, **caractérisé en ce que** ladite distance donnée (x) est d'environ 3 mm.

11. Agencement selon l'une quelconque des revendications précédentes, **caractérisé en ce que** ladite barrière d'isolement électrique constitue un isolement supplémentaire tel que défini dans au moins l'une des normes EN60065, EN60742, EN61558, EN61347-1 et EN61347-2-2.

12. Agencement selon l'une quelconque des revendications précédentes, **caractérisé en ce que** ladite matière électriquement isolante a une résistivité supérieure à 3 * 10⁹ Ω. cm.

13. Agencement selon l'une quelconque des revendications précédentes, **caractérisé en ce que** ladite matière électriquement isolante est une matière plastique.

14. Agencement selon l'une quelconque des revendications précédentes, **caractérisé en ce que** ladite matière électriquement isolante est sélectionnée dans le groupe composé du polycarbonate, du polyamide et du téréphtalate de polybutylène.

15. Agencement selon l'une quelconque des revendications précédentes, **caractérisé en ce que** ledit boîtier (10) comprend au moins l'une d'une paroi supérieure (10a) et d'une paroi de fond (10b) du boîtier (10), dans lequel ladite au moins l'une de ladite paroi supérieure (10a) et de ladite paroi de fond (10b) a une épaisseur de paroi au moins égale à ladite épaisseur donnée (S).

16. Agencement selon la revendication 1 ou la revendication 15, **caractérisé en ce que** ladite épaisseur de paroi, au moins égale à une épaisseur donnée (S), est sensiblement uniforme.

17. Agencement selon la revendication 1, **caractérisé en ce que** ledit élément en forme de cuvette présente une partie d'ouverture évasée (100) définissant une partie agrandie du boîtier (10), de manière correspondante audit ensemble de broches (12), dans lequel ladite partie agrandie assure au moins en partie ladite distance entre l'une quelconque desdites broches (12) dudit ensemble et ledit rebord périphérique inférieur du boîtier (10).

18. Agencement selon l'une quelconque des revendications précédentes, **caractérisé en ce que** ledit boîtier (10) consiste en au moins deux éléments isolants.

19. Agencement selon la revendication 18, **caractérisé en ce que** ledit boîtier (10) comprend un élément en forme de cuvette ainsi qu'au moins un élément non en forme de cuvette, constituant une paroi de fond (10b) du boîtier.

20. Agencement selon la revendication 19, **caractérisé en ce que** ledit boîtier (10) comprend un élément présentant une partie d'ouverture évasée (100), et ledit au moins un élément non en forme de cuvette s'adaptant dans ladite partie d'ouverture évasée (100).

21. Agencement selon l'une quelconque des revendications précédentes, comprenant une pluralité de composants électriques (C1, C2) entourés par ledit boîtier (10).

22. Agencement selon l'une quelconque des revendications précédentes, **caractérisé en ce que** les broches (12) dudit ensemble sont au moins en partie montées dans ledit boîtier (10).

23. Agencement selon l'une quelconque des revendications précédentes, **caractérisé en ce que** les broches (12) dudit ensemble sont au moins en partie portées par ledit composant (C ; C1, C2).

24. Agencement selon l'une quelconque des revendications précédentes, **caractérisé en ce que** ledit boîtier (10) comprend un élément en forme de cuvette, ledit boîtier (10) présentant une paroi supérieure (10a) recouvrant au moins en partie la zone supérieure dudit élément en forme de cuvette.

25. Agencement selon la revendication 24, **caractérisé en ce que** ladite paroi supérieure (10a) a une épaisseur de paroi au moins égale à ladite épaisseur donnée (S).

26. Agencement selon l'une quelconque des revendications précédentes, **caractérisé en ce que** ledit boîtier (10) comprend, de manière correspondante avec ledit rebord périphérique inférieur, au moins une structure saillante (106), ladite au moins une structure saillante (106) ajoutant à ladite distance entre l'une quelconque desdites broches de contact (12) dudit ensemble et ledit rebord périphérique inférieur.

27. Agencement selon la revendication 26, **caractérisé en ce que** ledit boîtier (10) comprend au moins deux côtés comportant des structures saillantes (106) s'étendant respectivement à partir de ceux-ci.

28. Agencement selon la revendication 27, **caractérisé en ce que** lesdits au moins deux côtés, présentant des structures saillantes (106) s'étendant à partir d'eux, sont mutuellement adjacents.

29. Agencement selon la revendication 27, **caractérisé en ce que** lesdits au moins deux côtés, présentant des structures saillantes (106) s'étendant à partir d'eux, sont opposés l'un à l'autre.

30. Agencement selon l'une des revendications 27 à 29, **caractérisé en ce que** lesdites structures saillantes (106) s'étendant à partir desdits au moins deux côtés dépassent dudit boîtier (10) sur des longueurs différentes.

31. Agencement selon l'une quelconque des revendications précédentes, **caractérisé en ce que** ledit boîtier (10) comprend un prolongement (108) de ladite paroi périphérique, s'étendant à distance dudit au moins un composant (C), ledit prolongement (108) constituant un espace supplémentaire de séparation par rapport à au moins l'un :
- d'un support de substrat (PCB) prévu pour le montage dudit au moins un composant (C), et
- de composants (BC) voisins quelconques, montés à proximité dudit au moins un composant (C) sur ledit support de substrat (PCB).

32. Agencement selon la revendication 31 en combinaison avec l'une quelconque des revendications 26 à 30, dans lequel ladite structure saillante (106) coopère avec ledit prolongement (108) de ladite paroi périphérique pour assurer davantage de distance d'isolement par rapport auxdits composants voisins (BC).
